# EUROPÄISCHE PATENTSCHRIFT

(11) **EP 2 071 356 B1**
(45) Veröffentlichungstag und Bekanntmachung des Hinweises auf die Patenterteilung: **04.07.2012**
(21) Anmeldenummer: 08019406.1
(22) Anmeldetag: 06.11.2008
(51) Int. Cl.: G01S 7/497, G01S 7/486, G01S 7/487, G01S 7/481, G01S 17/10

(54) **Messvorrichtung**
Measuring device
Dispositif de mesure

(30) Priorität: 17.11.2007 DE 102007054961
(43) Veröffentlichungstag der Anmeldung: 17.06.2009
(73) Patentinhaber: Wenglor sensoric Elektronische Geräte GmbH, 88069 Tettnang (DE)
(72) Erfinder: Spähn, Peter, 88239 Wangen/Primisweiler (DE)
(74) Vertreter: Engelhardt, Volker

(56) Entgegenhaltungen:
- JP-A- 1 257 289
- US-A- 3 644 740
- US-A- 4 077 718

## Beschreibung

Die Erfindung bezieht sich auf eine Messvorrichtung zur Bestimmung des Abstandes zwischen dieser und einem Objekt, nach dem Oberbegriff des Patentanspruches 1.

Solche Messvorrichtungen werden benötigt, um einen exakten Abstandswert zwischen der Messvorrichtung und dem sich an diese annähernden Objekt zu erhalten und um gegebenenfalls durch den derart ermittelten Messwert ein Schaltsignal zu generieren, durch das ein elektrisches Gerät angesteuert wird.

Die Abstandsmessung erfolgt mittels Laser-Lichtwellen, da diese in einem sehr kleinen Zeitintervall ausstrahlbar sind. Dabei wird die Zeit gemessen, die das Licht von der Sendediode zum Objekt und von diesem zur Empfangsdiode benötigt. Da die

Lichtgeschwindigkeit konstant und bekannt ist, kann der Abstand zwischen dem Objekt und der Messvorrichtung durch die physikalische Formel s=v*t berechnet werden.

Üblicherweise werden Laserdioden eingesetzt, um Lichtwellen zu emittieren, denn es ist notwendig, dass aufgrund der sehr hohen Lichtgeschwindigkeit eine schnell schaltbare Lichtquelle zu verwenden ist. An die Empfangsdiode sind dabei identische technische Anforderungen zu stellen, so dass sich in der Praxis sogenannte Avalanche - Foto Dioden oder Lawinen-Foto-Dioden, die ähnlich wie ein Fotomultiplier funktionieren, zum Einsatz gelangen. Solche Lawinen-Foto-Dioden erzeugen eine sehr hohe interne Verstärkung, wenn die von der Sendediode emittierten Laserwellen von dem Objekt auf die Empfangsdiode reflektiert werden, denn in der Empfangsdiode erfolgt in der Sperrschicht eine Stossionisation. Diese Spannungsveränderungen in der Empfangsdiode sind durch elektronische Schaltungen, Regelungseinrichtungen ohne zeitliche Verzögerung feststellbar, so dass das Zeitintervall zwischen dem Ausstrahlen der Laserwellen und der Spannungswertveränderungen der Lawinen-Foto-Diode in Echtzeit gemessen werden kann.

Als nachteilig bei derartigen Messvorrichtungen hat sich, beispielsweise bei US 3,644,740, herausgestellt, dass die Empfindlichkeit der Empfangsdiode oftmals wesentlich unterhalb der optimalen vorgegebenen Empfindlichkeit zu betreiben ist, denn die an der Empfangsdiode angelegte Betriebsspannung, durch die diese eingeschaltet ist, hat erheblich unter dem für den Betrieb der Empfangsdiode optimalen Spannungswert zu liegen, denn die Lawinen-Foto-Diode ist äußerst temperaturempfindlich. Durch die vorliegende Temperaturabhängigkeit der Empfangsdiode kann diese nicht im Bereich der vorgegebenen Durchbruchspannung der Empfangsdiode betrieben werden, da ansonsten bei Temperaturveränderungen die konstant anliegende Betriebsspannung den Grenzwert der Durchbruchspannung überschreitet und folglich die Messempfindlichkeit der Empfangsdiode verringert oder sogar vollständig gestört ist.

Die Messgenauigkeit und die Empfindlichkeit der Empfangsdiode sind knapp unterhalb der Durchbruchspannung am genauesten. Wird die Betriebsspannung, durch die die Empfangsdiode mit Energie versorgt wird, oberhalb der dieser zugeordneten Durchbruchspannung betrieben, sinkt die Messempfindlichkeit und damit die Genauigkeit der Messergebnisse, denn in der Empfangsdiode entsteht ein Rauscheffekt, durch den eine sogenannte Rauschspannung hervorgerufen wird, durch die die Auswertung bei einem sich an die Empfangsdiode annähernden Objekt erheblich verfälscht ist. Darüber hinaus wird die Lawinen-Foto-Diode durch Spannungswerte die oberhalb der vorgegebenen Durchbruchsspannung liegen, beschädigt und ist nach eingeschränkter Lebensdauer auszutauschen.

Aus der US 5,638,163 kann entnommen werden, mit welcher programmierbaren Software eine Vorrichtung zur Abstandsbestimmung zwischen einem Objekt und einer Sende- und Empfangsdiode kalibriert werden kann. Bevor nämlich die eigentliche Messung erfolgt, wird vor jedem Messvorgang über die Software eine Spannungsabfrage der Empfangsdiode durchgeführt. Mit jedem Abfrageschritt wird dabei die Betriebsspannung, die an der Empfangsdiode anliegt, um einen vorgegebenen Betrag reduziert. Sobald ein bestimmter Grenzwert unterschritten ist, wird die Empfangsdiode keine Störspannungen aussenden, so dass diese nunmehr mit einer nahezu optimalen Betriebsspannung versorgt ist.

Sobald dieser Betriebsspannungswert an der Empfangsdiode anliegt, kann die Abstandsmessung erfolgen, in dem durch die Sendediode Laserlichtwellen in Richtung des Objektes ausgestrahlt werden. Sobald die Laufzeiten der Laserwellen ausgewertet sind, kann durch eine Auswerteeinheit ermittelt werden, welcher Abstand zwischen dem Objekt und der Messvorrichtung vorliegt. Die Laserwellen werden nämlich eine Spannungsveränderung in der Empfangsdiode bewirken, die messbar ist. Die zeitliche Verzögerung zwischen dem Zeitpunkt der Aussendung der Laserwellen von der Sendediode bis hin zu dem Zeitpunkt, an dem die Spannungsveränderung an der Empfangsdiode messbar ist, wird herangezogen, um eine Abstandsmessung aufgrund der konstanten Geschwindigkeit der Laserwellen zu errechnen.

Als nachteilig bei dieser Vorrichtung hat sich herausgestellt, dass vor jedem Messvorgang ein Abfragemodus zu durchlaufen ist, um die Messvorrichtung, insbesondere die Betriebsspannung der Empfangsdiode, auf einen optimalen Wert zu kalibrieren. Erst wenn dieser Abfrage- und Einstellungszyklus vollständig durchlaufen ist, kann die Messvorrichtung zur Ermittlung des Abstandes verwendet werden.

Darüber hinaus können sich aufgrund von Störsignalen oder sonstigen äußeren Einflüssen oder aufgrund von Materialermüdung der verwendeten elektrischen Bauteilen auch während des Messzyklusses Veränderungen der Betriebsspannung an der Empfangsdiode einstellen, so dass nicht gewährleistet ist, dass der zum Zeitpunkt der Messung eingestellte Betriebsspannungswert optimal eingestellt ist.

Es ist daher Aufgabe der Erfindung, eine Messvorrichtung der eingangs genannten Gattung bereit zu stellen, mittels der zum Einen der Abstand zwischen einem sich an die Messvorrichtung annähernden Objekt und der Messvorrichtung zuverlässig feststellbar ist und die zum Anderen in einem Empfindlichkeitsbereich zur Abstandsbestimmung arbeitet, der permanent im Bereich der Durchbruchspannung der verwendeten Empfangsdiode liegt, um deren Messgenauigkeit zu optimieren. Des Weiteren soll die erfindungsgemäße Messvorrichtung kostengünstig herstellbar sein und eine lange Lebensdauer aufweisen.

Diese Aufgabe wird durch die Merkmale des kennzeichnenden Teils von Patentanspruch 1 gelöst.

Weitere vorteilhafte Weiterbildungen der Erfindung ergeben sich aus den Unteransprüchen.

Dadurch, dass die an der Empfangsdiode feststellbaren Spannungswerte zeitlich versetzt, also nachdem die durch den ersten Schaltkreis betriebene Sendediode die Laserstrahlen emittiert hat, eine weitere zusätzliche Überprüfung in einem Überprüfungsintervall stattfindet, können durch die derart ermittelten Messergebnisse Rückschlüsse auf den Betriebszustand der Empfangsdiode gezogen werden. Die Betriebsspannung an der Empfangsdiode sind zum Einen von der Annäherung des Objektes unabhängig, denn zu diesem Überprüfungszeitpunkt erfolgt keine Lichtwellenrefflektion durch das Objekt, da durch die Sendediode keine Lichtwellen ausgestrahlt sind und zum Anderen kann der an der Empfangsdiode sich einstellende

Spannungswert festgestellt werden, der im Wesentlichen von der an dieser Diode vorherrschenden Betriebsspannung und den sich verändernden Temperaturbedingungen beeinflusst wird.
Wenn eine Spannung an der Empfangsdiode anliegt, die zu nahe an der Durchbruchspannung liegt und somit ein zu hohes Rauschen in der Lawinen-Foto-Diode entsteht, wird die Spannung an der Empfangsdiode verringert, und wenn die an der Empfangsdiode ermittelte Spannung zu weit unterhalb der Durchbruchspannung liegt, wird die Spannung an der Empfangsdiode erhöht. Eine solche Veränderung der Spannung an der Empfangsdiode erfolgt nach jedem Sendeimpuls der Sendediode, wodurch vorteilhafterweise gewährleistet ist, dass der Betriebszustand der Empfangsdiode permanent und optimal an mögliche Temperaturschwankungen angepasst ist. Die Betriebsspannung soll demnach im Wesentlichen im Bereich der Durchbruchspannung der eingesetzten Empfangsdiode verlaufen.

Es ist jedoch besonders vorteilhaft, wenn zwei unterschiedliche Komparatoren in dem zweiten Schaltkreis parallel zueinander geschalten sind, um nämlich mittels des ersten Komparators die sich ergebende Spannungswertveränderung an der Empfangsdiode bei der Annäherung eines Objektes zu messen und mittels des zweiten Komparators, dessen Empfindlichkeit durch eine geringe Referenzspannung erhöht ist, festzustellen, ob die Betriebsspannung der Empfangsdiode unter- oder oberhalb der Durchbruchspannung liegt, wodurch eine Anpassung des anliegenden Spannungswert an der Empfangsdiode einstellbar ist.

Bei dieser Ausführungsvariante liefern die beiden Komparatoren unterschiedliche Signale, die derart auswertbar sind, dass das Signal des ersten Komparators Rückschlüsse über den vorhandenen Abstand zwischen dem Objekt und der Messvorrichtung liefert und dass durch das Signal des zweiten Komparators die Spannung an der Empfangsdiode in Abhängigkeit von dem Betriebszustand der Empfangsdiode regelbar ist.

In der Zeichnung ist ein erfindungsgemäßes Ausführungsbeispiel dargestellt, das nachfolgend näher erläutert ist. Im Einzelnen zeigt:
- Figur 1: eine Messvorrichtung zur Bestimmung des Abstandes zwischen dieser und einem Objekt, mit zwei elektrischen Schaltkreisen, in denen elektrische Bauteile integriert sind, zur Abstands- und Betriebsspannungsermittlung, und
- Figur 2: ein Schaltdiagramm, in dem die zeitliche Abfolge der Messintervalle aufgetragen ist.

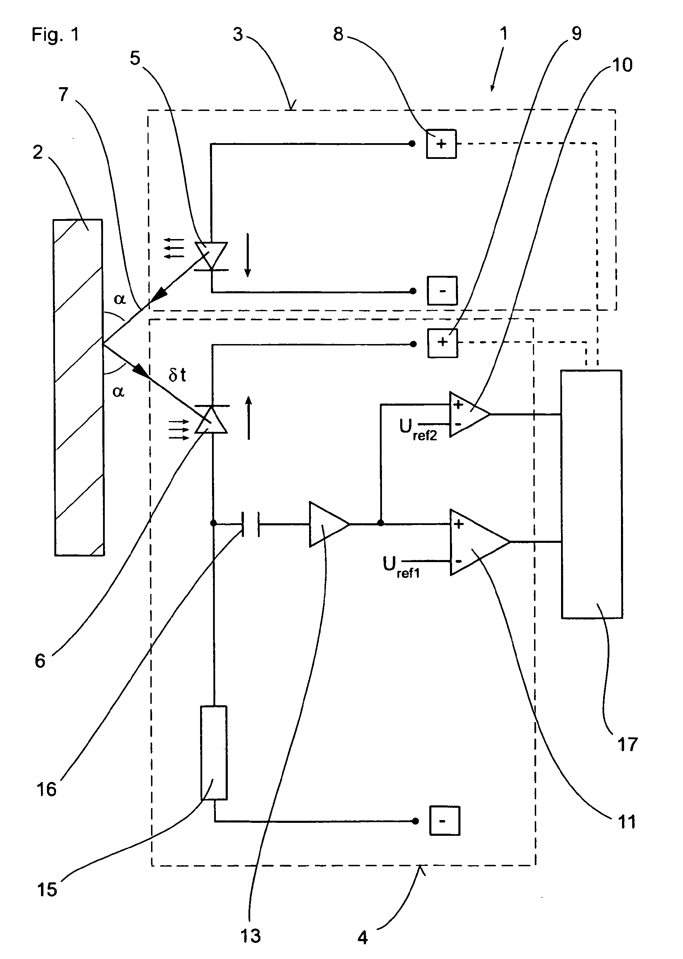

Der Figur 1 ist eine Messvorrichtung 1 zu entnehmen, durch die der Abstand zwischen dieser und einem sich annähernden Objekt 2 ermittelbar ist. Die Messvorrichtung 1 besteht aus einem ersten und einem zweiten Schaltkreis 3 bzw. 4. In dem Schaltkreis 3 ist eine Sendediode 5, die Lichtwellen, vorzugsweise Laserwellen, impulsweise ausstrahlt, integriert. In dem Schaltkreis 4 ist eine Empfangsdiode 6, nämlich eine Lawinen-Foto-Diode, eingebaut, die derart benachbart zu der Sendediode 5 angeordnet ist, dass die von der Laserdiode 5 emittierten Laserwellen, wenn diese auf das Objekt 2, in einem Einfallswinkel α auftreffen und von diesem mit dem Austrittswinkel α reflektiert werden, auf die Empfangsdiode 6 einfallen.

Des Weiteren besteht die Messvorrichtung 1 aus zwei Komparatoren 10 und 11, die parallel zueinander im zweiten elektrischen Schaltkreis 4 geschaltet sind. Beiden Komparatoren 11 und 12 ist ein Signalverstärker 13 vorgeschaltet, der das eingehende Spannungssignal, das von der Empfangsdiode 6 abgegeben wird, verstärkt.

Die beiden Komparatoren 10 und 11 sind über elektrische Leitungen mit einer Auswerteeinheit 17 verbunden, die von den Komparatoren 10 und 11 zur Verfügung gestellten und übermittelten elektrischen Signale werden von dieser erfasst ausgewertet und in entsprechende Steuersignale umgewandelt, um die dem ersten Schaltkreis 3 zugeordnete Stromquelle 8 impulsweise zu betreiben und um die dem zweiten Schaltkreis 4 zugeordnete Stromquelle 9 mit einem entsprechenden Spannungswert einzustellen, durch den die Empfangsdiode 6 mit der Betriebsspannung versorgt wird.

Der erste Komparator 10 erhält einen Spannungswert, der mit U_{ref 2} bezeichnet ist und der derart bemessen ist, dass die Annäherung des Objektes 2 an die Messvorrichtung 1 zu einer Spannungserhöhung der Empfangsdiode 6 führt, die größer bemessen ist als U_{fer 2}. Folglich sendet der Komparator 10 ein entsprechendes Signal an die Auswerteeinheit 17, durch die derart festgestellt werden kann, dass das Objekt 2 einen vorgegebenen Abstand an die Messvorrichtung 1 einnimmt.

Der zweite Komparator 11 ist mit einem vorgegebenen Spannungswert programmiert, der mit U_{ref 1} schematisch gekennzeichnet ist. Der Spannungswert U_{ref 1} ist dabei kleiner bemessen als der Spannungswert U_{ref 2} des ersten Komparators 10. Durch die Empfangsdiode 6 wird nämlich permanent ein Rauschsignal erzeugt, das einen bestimmten Spannungswert aufweist. Die Durchbruchsspannung der Empfangsdiode 6 ist erreicht, wenn die Rauschspannung zwischen U_{ref1} und U_{ref2} liegt.

Wenn nunmehr von der Sendediode 5 ein Lichtwellenimpuls ausgestrahlt wird und dieser auf das Objekt 2 auftrifft und von diesem zu der Empfangsdiode 6 reflektiert wird, entsteht in dieser ein von dem Abstand des Objektes 2 und der Lichtintensität abhängiger Spannungswert, der mit der Spannung U_{ref 2} verglichen ist. Durch den dem Signalverstärker 13 nachgeschalteten Komparator 10 wird somit ein elektrisches Signal generiert, das von dem sich ergebenden Abstand zwischen dem Objekt 2 und der Messvorrichtung 1 bezieht. Die Auswerteeinheit 17 nimmt in Abhängigkeit von den an diese weitergegebenen Schaltsignalen entsprechend vorprogrammierte Arbeitsschritte vor.

Durch den Komparator 11 wird die Betriebsspannung der Empfangsdiode 6 während eines Überprüfungsintervalls gemessen, das zeitlich versetzt zu dem Messzyklus liegt.

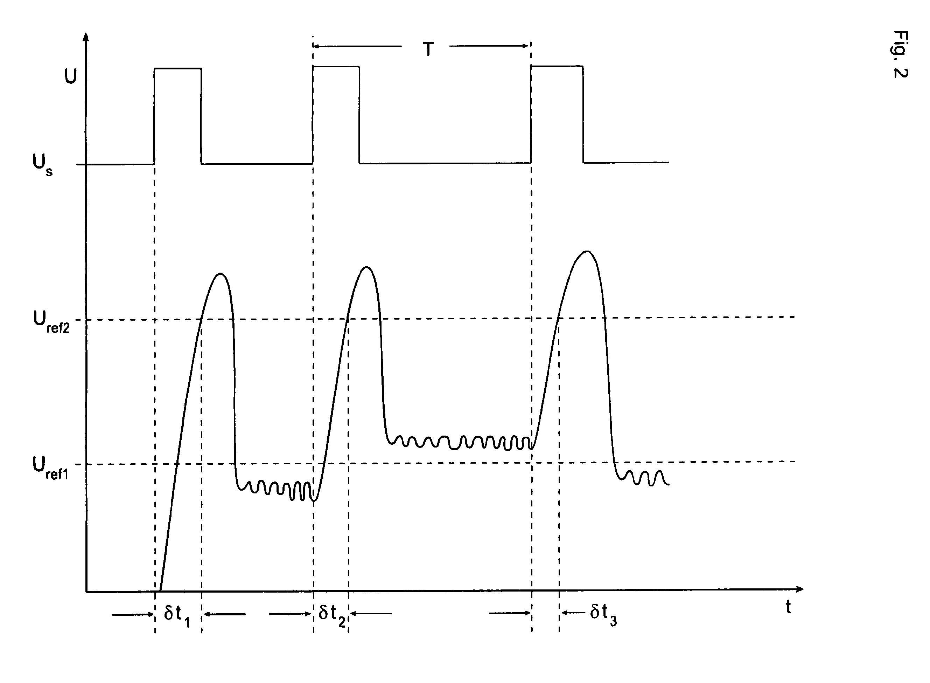

Aus Figur 2 kann der zeitliche Verlauf des Messzyklus T und des Überprüfungsintervalls für die Abfrage der Empfangsdiode 6 entnommen werden. Der erste Schaltkreis 3 wird dabei impulsweise betrieben mit der Spannung Uₛ, so dass die Sendediode 5 Laserwellen in einem vorgegebenen Zeitabstand T ausstrahlt. Die Annäherung des Objektes 2 kann von der Empfangsdiode 6 innerhalb dieses Zeitabstandes gemessen werden, dies ist das zur Verfügung stehende Überprüfungsintervall.

Nachdem die erste Stromquelle 8 die Sendediode 5 nicht mehr mit Spannung versorgt und somit die als Signalspannung US gekennzeichnete Spannung zeitweise abgeschaltet ist, wird von der Empfangsdiode 6 weiterhin ein als Rauscheffekt bezeichnetes Spannungssignal an die beiden Komparatoren 10 und 11 weitergegeben. Da dieses Spannungssignal jedoch auf jedem Fall unterhalb des Grenzwertes von der Spannung U_{ref 2} liegt, ist der erste Komparator 10 mittels dem die Abstandsmessung durchgeführt ist, nicht betriebsbereit. Der zweite Komparator 11 wird jedoch mit einem Referenzspannungswert U_{ref 1} ausgerüstet, so dass beim Überschreiten dieses voreingestellten Grenzwertes durch die an der Empfangsdiode 6 anliegende Spannung an die Auswerteeinheit 17 ein entsprechendes Informationssignal ausgesandt wird. Durch dieses wird bewirkt, dass durch die Auswerteeinheit 17 die von der zweiten Stromquelle 9 zur Verfügung gestellte Spannung im nächsten Messzykluserhöht wird.

Umgekehrt gilt, dass wenn die von der Empfangsdiode 6 nach dem Messzyklus festgestellte Spannung oberhalb des Spannungswertes U_{ref 1} liegt, eine Absenkung der von der Stromquelle 9 zur Verfügung gestellten Spannung durch die Auswerteeinheit 17 erfolgt.

Folglich wird nach jedem Messzyklus das Rauschen und die damit verbundene Spannung der Empfangsdiode 6 durch den zweiten Komparator 11 überprüft und bei entsprechenden voreinstellbaren Messwerten, beispielsweise U_{ref 1,} wird durch diesen ein entsprechendes elektrisches Signal an die Auswerteeinheit 17 übermittelt, um die Spannung der Stromquelle 9 für den Betrieb der Empfangsdiode 6 abzusenken oder anzuheben.

## Patentansprüche

1. Optische, mittels Laserwellen betriebene, Messvorrichtung (1) zur Bestimmung des Abstandes zwischen dieser und einem Objekt (2), mit einem elektrischen Schaltkreis (4), durch den eine Empfangsdiode (6) mit Spannung beaufschlagt ist, und mit einem zu der Empfangsdiode (6) in Reihe geschalteten ersten Komparator (10), durch den die an der Empfangsdiode (6) bei der Annäherung des Objektes (2) feststellbaren Spannungswertveränderungen mit Hilfe der Laufzeit der von der Messvorrichtung (1) generierten Laserwellen, die zwischen einer Laserwellen emittierenden Sendediode (5), dem Objekt (2) und der Empfangsdiode (6) verlaufen, messbar sind,
**dadurch gekennzeichnet,**
**dass** durch einen weiteren elektrischen Schaltkreis (3) die Sendediode (5) impulsweise ansteuerbar ist, die benachbart zu der Empfangsdiode (6) angeordnet ist, dass durch einen zweiten Komparator (11) die Spannungswertveränderung der Empfangsdiode (6) zeitlich versetzt zu dem Sendeimpuls der Sendediode (5) ermittelbar ist, dass durch den zweite Komparator (11) die Betriebsspannung der Empfangsdiode (6) in Abhängigkeit von der von dem Komparator (11) festgestellten Spannungswertveränderung, die an der Empfangsdiode (6) während des Überprüfungsintervalles anliegt, regelbar ist und dass der erste und der zweite Schaltkreis (3, 4) von einer Auswerteeinheit (17) derart synchronisierbar sind, dass der Überprüfungszyklus der Betriebsspannung der Empfangsdiode (6) zwischen zwei Sendeimpulsen der Sendediode (5) erfolgt.

2. Messvorrichtung nach Anspruch 1,
**dadurch gekennzeichnet,**
**dass** die Sendediode (5) als Laser-Diode und die Empfangsdiode (6) als Lawinen-Foto-Diode ausgebildet sind und dass die durch den Komparator (11) einstellbare Betriebsspannung der Empfangsdiode (6) im Bereich der Durchbruchspannung der Empfangsdiode (6) eingestellt ist.

3. Messvorrichtung nach Anspruch 1 oder 2,
**dadurch gekennzeichnet,**
**dass** in den zweiten Schaltkreis (4) zwischen der Empfangsdiode (6) und dem Komparator (11) ein Signalverstärker (13) eingebaut ist, durch den die von der Empfangsdiode (6) abgeleitete Betriebsspannung gleichmäßig oder impulsweise innerhalb des Zeitintervalles, in dem der erste Schaltkreis (3) ausgeschaltet ist, die Betriebsspannung der Empfangsdiode (6) verstärkt.

4. Messvorrichtung nach Anspruch 1 oder 2,
**dadurch gekennzeichnet,**
**dass** der zweite Komparator (11) parallel zu dem ersten Komparator (10) geschaltet ist.

## Claims

1. An optical measuring device (1) operated by means of laser waves for measuring the distance between the measuring device (1) and an object (2), with an electrical switching circuit (4) by means of which a receiver diode (6) has a voltage applied to it, and with a first comparator (10) connected in series with the receiver diode (6), in which case the comparator (10) is able to measure the changes in the voltage value that can be observed when the object (2) approaches, this measurement being undertakes by means of the run time of the laser waves generated by the measuring device (1) which run between a transmitter diode (5) emitting laser waves, the object (2) and the receiver diode (6),
**characterised in that,**
an additional electrical circuit (3) allows the transmitter diode (5) located adjacent to the receiver diode (6) to be activated in pulses, that a second comparator (11) allows the voltage value change of the receiver diode (6) to be measured at an offset time to the transmission pulse of the transmitter diode (5), that the second comparator (11) allows the operating voltage of the receiver diode (6) to be controller depending on the voltage value change detected at the comparator (11) which is applied to the receiver diode (6) during the examination interval, and that the first and the second circuits (3, 4) can be synchronised by an revaluation unit (17) in such a way that the examination cycle of the operating voltage of the receiver diode (6) takes place between two transmission pulses of the transmitter diode (5).

2. The measuring device in accordance with Claim 1,
**characterised in that,**
the transmitter diode (5) is configures as a laser diode and the receiver diode (6) as an avalanche photodiode, and that the operating voltage of the receiver diode (6) which can be set by the comparator (11) is set in the range of the breakdown voltage of the receiver diode (6).

3. The measuring device in accordance with Claim 1 or 2,
**characterised in that,**
a signal amplifier (13) is installed in the second circuit (4) between the receiver diode (6) and the comparator (11), by means of which the operating voltage derived from the receiver diode (6) amplifies the operating voltage of the receiver diode (6) evenly or in pulses within the time interval during which the first circuit (3) is switched off.

4. The measuring device in accordance with Claim 1 or 2,
**characterised in that,**
the second comparator (11) is connected in parallel to the first comparator (10).

## Revendications

1. Dispositif de mesure optique (1), actionné par des ondes laser, destiné à déterminer la distance entre celui-ci et un objet (2), comprenant un circuit de commande électrique (4) mettant sous tension une diode réceptrice (6), et avec un premier comparateur (10) couplé en série avec la diode réceptrice (6), qui, à l'approche de l'objet (2), permet de mesurer les changements de tension détectable sur la diode réceptrice (6) à l'aide de la durée de marche des ondes laser générées par le dispositif de mesure (1), et qui sont dirigées entre la diode émettrice (5) émettant les ondes laser, l'objet (2) et la diode réceptrice (6),
**caractérisé en ce que**
moyennant un autre circuit de commande électrique (3), la diode émettrice (5) voisine de la diode réceptrice (6) se laisse actionner par impulsions, que moyennant un deuxième comparateur (11), le changement de tension de la diode réceptrice (6) se laisse déterminer de maniéré différée par rapport à l'impulsion d'émission de la diode émettrice (5), que moyennant le deuxième comparateur (11), la tension de service de la diode réceptrice (6) se laisse régler en dépendance du changement de tension qui est appliquée lors du contrôle sur la diode réceptrice (6) et déterminé par le comparateur (11), et que le premier et le deuxième circuit de commande électrique (3, 4) se laissent synchroniser par une unité d'évaluation (17) de sorte que le cycle de contrôle de la tension de service de la diode réceptrice (6) a lieu entre deux impulsions d'émission de la diode émettrice (5).

2. Dispositif de mesure d'après la revendication 1,
**caractérisé en ce que**
la diode émettrice (5) et conçue en tant que diode laser et la diode réceptrice (6) en tant que photodiode à avalanche et que la tension de service de la diode réceptrice (6) réglée par le comparateur est située dans la plage de la tension d'avalanche de la diode réceptrice (6).

3. Dispositif de mesure d'après les revendications 1 ou 2,
**caractérisé en ce**
**qu'**il est prévu un amplificateur de signal (13) entre la diode réceptrice (6) et le comparateur (11) dans le deuxième circuit de commande électrique (4), qui a pour effet que la tension de service dérivée de la diode réceptrice (6) amplifie uniformément ou par impulsions la tension de service de la diode réceptrice (6) à l'intérieur de l'intervalle dans lequel le premier circuit de commande électrique (3) est désactivé.

4. Dispositif de mesure d'après les revendications 1 ou 2,
**caractérisé en ce que**
le deuxième comparateur (11) est branché en parallèle par rapport au premier comparateur (10).
